# DEMANDE DE BREVET EUROPEEN

(11) **EP 1 359 550 A1**
(43) Date de publication de la demande: **05.11.2003**
(21) Numéro de dépôt: 02354155.0
(22) Date de dépôt: 07.10.2002
(51) Int. Cl.: G07F 7/10

(54) **Régéneration d'une quantité secrète à partir d'un identifiant d'un circuit intégré**

(30) Priorité: 30.11.2001 FR 0115526
(71) Demandeur: STMicroelectronics S.A., 92120 Montrouge (FR)
(72) Inventeur: Wuidart, Luc, 83910 Pourrieres (FR); Bardouillet, Michel, 13790 Rousset (FR); Plaza, Laurent, 13710 Fuveau (FR)
(74) Mandataire: de Beaumont, Michel

(57) **Abrégé**

L'invention concerne un procédé et circuit de génération d'une quantité secrète (KEY) à partir d'un identifiant d'un circuit intégré (2), consistant à combiner (13) un premier mot numérique (12) issu d'un réseau de paramètres physiques sensible aux dispersions technologiques et de procédé de fabrication du circuit intégré dont ils constituent une signature (10) avec un deuxième mot stocké dans un élément (14) de mémoire non volatile.

## Description

La présente invention concerne l'utilisation d'une quantité secrète issue d'un circuit intégré ou d'un élément de sous-ensemble électronique contenant un tel circuit. Par exemple, l'invention concerne l'utilisation d'une telle quantité secrète par des programmes en tant que clé de chiffrement, en tant que quantité secrète d'un processus d'identification ou d'authentification du circuit intégré. L'invention concerne plus particulièrement l'utilisation d'un identifiant numérique d'une puce de circuit intégré issu d'un réseau de paramètres physiques liés à la fabrication de la puce de circuit intégré.

L'utilisation d'un identifiant issu d'un réseau de paramètres physiques, par exemple, pour authentifier une puce de circuit intégré ou pour chiffrer une donnée qu'elle fournit, est de plus en plus recherchée dans la mesure où cela permet d'utiliser un mot binaire caché ou enfoui dans le circuit intégré sans devoir pour autant le stocker à demeure dans un élément de mémorisation piratable. On améliore ainsi la fiabilité du système contre des fraudes éventuelles. De plus, le recours à un réseau de paramètres physiques permet d'obtenir des identifiants numériques distincts les uns des autres pour différentes puces de circuit intégré issues d'une fabrication donnée.

Généralement, l'identifiant numérique du circuit intégré est fourni à l'extérieur du circuit après avoir été le cas échéant codé ou brouillé pour être transmis vers un système distant. Ce dernier exploite le mot qu'il reçoit, généralement sans avoir à connaître l'identifiant.

Un exemple d'application de l'invention concerne le domaine des cartes à puce utilisées pour des transactions financières à partir d'unités de compte prépayées ou non, que la transmission soit avec ou sans contact avec le lecteur de carte à puce.

Un autre exemple d'application concerne les systèmes de transmission de données utilisant un décodeur personnalisé côté utilisateur. Dans un tel cas, le décodeur peut comprendre un circuit d'authentification exploitant un identifiant issu d'un réseau de paramètres physiques d'un circuit intégré qu'il contient. Par analogie avec les lecteurs de carte à puce utilisés dans les systèmes de paiement, cela revient au même que si l'on combine un lecteur avec sa carte à puce chez l'utilisateur, l'authentification restant faite par un système différent du lecteur.

Un inconvénient du recours à un identifiant d'un circuit intégré issu d'un réseau de paramètres physiques est lié à son caractère individuel et immuable.

Ainsi, dans le cas où l'identifiant ou un mot numérique (quantité d'authentification ou clé de chiffrement) contenant cet identifiant parvient à être piraté par un fraudeur, il n'existe plus d'autres solutions que de changer le circuit intégré. En effet, à partir du moment où l'on suspecte que l'identifiant a été piraté, il est souhaitable dans les applications sécurisées de ne plus utiliser cet identifiant. Ce phénomène est généralement connu sous le nom de révocation d'une clé de chiffrement ou d'un authentifiant, ou plus généralement d'une quantité secrète.

L'absence de solution à la révocation d'une clé ou quantité secrète basée sur l'utilisation d'un réseau de paramètres physiques d'un circuit intégré limite actuellement l'utilisation de ces identifiants qui sont pour le reste très avantageux.

La présente invention vise à pallier les inconvénients connus de l'utilisation d'un identifiant numérique issu d'un réseau de paramètres physiques dans un circuit intégré.

L'invention vise, plus particulièrement, à permettre la révocation d'une quantité ou clé secrète basée sur un identifiant issu d'un réseau de paramètres physiques sans pour autant qu'il soit nécessaire de changer le circuit intégré concerné.

On pourrait penser multiplier le nombre de réseaux de paramètres physiques pour multiplier le nombre d'identifiants numériques possibles en cas de révocation. Une telle solution présente toutefois l'inconvénient d'être encombrante dans le circuit intégré. De plus, le nombre d'identifiants possibles reste très limité.

En outre, on peut rechercher une taille de quantité secrète qui soit supérieure à la taille du mot issu du réseau de paramètres physiques.

Un autre objet de la présente invention est de proposer une solution qui ne supprime pas le caractère individuel de l'identifiant du circuit intégré au moyen d'un réseau de paramètres physiques.

L'invention vise également à proposer une solution qui soit compatible avec la miniaturisation des circuits intégrés.

L'invention vise également à proposer une solution qui soit transparente côté système d'exploitation de la quantité secrète, c'est-à-dire qui ne nécessite pas que celui-ci connaisse les moyens utilisés pour rendre plus sûre la quantité secrète.

Pour atteindre ces objets et d'autres, la présente invention prévoit un procédé de génération d'une quantité secrète à partir d'un identifiant d'un circuit intégré, consistant à combiner un premier mot numérique issu d'un réseau de paramètres physiques avec un deuxième mot stocké dans un élément de mémoire non volatile.

Selon un mode de mise en oeuvre de la présente invention, le deuxième mot est destiné à être modifié suite à une révocation d'une quantité secrète précédente.

Selon un mode de mise en oeuvre de la présente invention, le deuxième mot est généré de façon aléatoire.

Selon un mode de mise en oeuvre de la présente invention, au moins le premier mot et la quantité secrète sont stockés dans des éléments d'une zone sécurisée du circuit intégré.

Selon un mode de mise en oeuvre de la présente invention, le deuxième mot est brouillé au moyen d'au moins une partie du premier mot.

L'invention prévoit également un procédé de modification d'une quantité secrète d'identification d'un circuit intégré obtenue à partir d'un premier mot numérique issu d'un réseau de paramètres physiques et considérée comme révoquée, consistant à combiner ledit premier mot avec un deuxième mot stocké dans un élément de mémoire non volatile, et à changer ledit deuxième mot à chaque besoin de génération d'une nouvelle quantité secrète.

L'invention prévoit en outre un circuit de génération d'une quantité secrète interne à un circuit intégré, comportant :
un générateur d'un premier mot propre à la puce de circuit intégré basé sur un réseau de paramètres physiques ;
un élément de mémorisation non volatile destiné à contenir un deuxième mot numérique ; et
un combineur des deux premiers mots fournissant ladite quantité secrète.

Selon un mode de réalisation de la présente invention, le deuxième mot peut être remplacé en cas de révocation de quantité secrète.

Selon un mode de réalisation de la présente invention, le circuit comporte en outre un brouilleur en entrée/sortie de l'élément de mémorisation non volatile, le brouilleur exploitant au moins une partie du premier mot issu du réseau de paramètres physiques.

Selon un mode de réalisation de la présente invention, le circuit comporte en outre un générateur de mots aléatoires pour former ledit deuxième mot numérique.

Selon un mode de réalisation de la présente invention, le circuit comporte des moyens pour rendre éphémère les stockages respectifs du premier mot numérique issu du réseau de paramètres physiques et du mot formant la quantité secrète.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, par une vue très schématique et sous forme de bloc, un mode de réalisation d'une cellule d'extraction d'une quantité secrète selon la présente invention ;
la figure 2 illustre une variante de la cellule d'extraction de la figure 1.

Pour des raisons de clarté, seuls les éléments du circuit intégré qui sont nécessaires à la compréhension de l'invention ont été représentés aux figures et seront décrits par la suite. En particulier, les constituants du circuit intégré ou de l'élément sous-ensemble électronique qui ne font pas partie de la génération de la quantité secrète au moyen du réseau de paramètres physiques caractéristique de l'invention n'ont pas été illustrés et ne font pas l'objet de l'invention. De plus, l'exploitation de la quantité secrète (par exemple par un processus d'authentification ou de chiffrement) qu'elle soit interne ou externe au circuit intégré n'a pas été détaillée, l'invention s'appliquant à tout processus classique.

Une caractéristique de la présente invention est de combiner, au sein même de la cellule de génération de la quantité secrète d'un circuit intégré, un premier mot numérique issu d'un réseau de paramètres physiques avec un deuxième mot numérique stocké dans un élément de mémorisation non volatile de la cellule de génération. La quantité secrète proprement dite, servant par exemple au chiffrement d'une donnée numérique ou à l'authentification du circuit intégré ou plus généralement de l'élément ou sous-ensemble électronique qui le contient, est constituée par le mot résultant de cette combinaison.

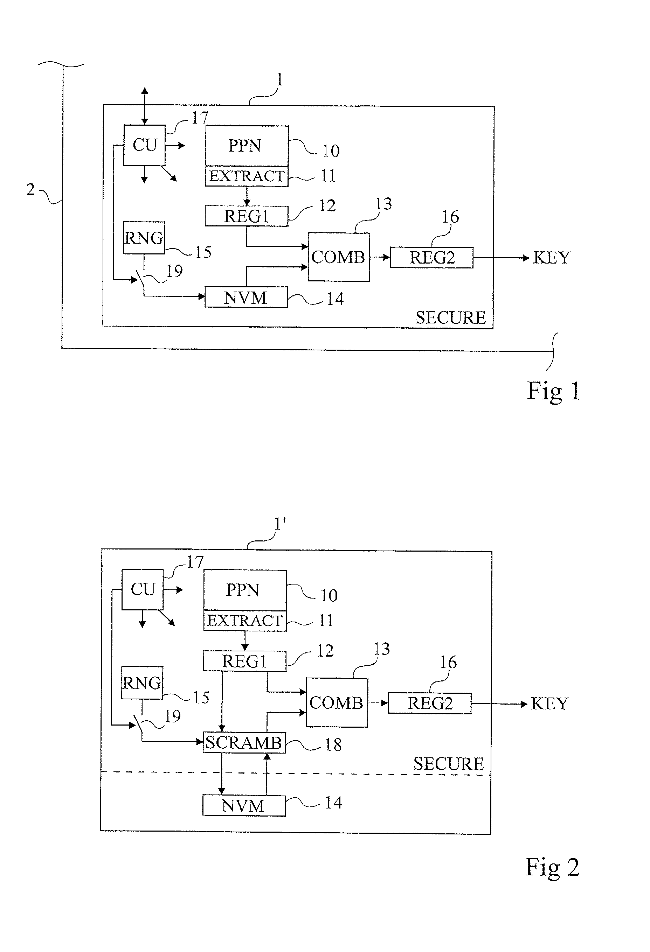

La figure 1 représente, de façon très schématique et sous forme de blocs, un premier mode de réalisation d'une cellule 1 de génération d'une quantité secrète KEY d'un circuit intégré 2. Le circuit intégré 2 comporte d'autres éléments non représentés. Seule la cellule 1 de génération de la quantité secrète KEY intéresse l'invention. Cette quantité peut ensuite être exploitée pour authentifier le circuit intégré par un système externe ou pour chiffrer d'autres données, éventuellement après d'autres traitements subis au sein du circuit 2.

La cellule 1 comporte essentiellement un réseau de paramètres physiques 10 (PPN) lié à la fabrication de la puce de circuit intégré. Ce réseau 10 fournit un grand nombre de signaux et est associé à un circuit d'extraction 11 (EXTRACT) d'un premier mot numérique stocké dans un élément de mémorisation temporaire 12 (REG1).

Le réseau de paramètres physiques peut être constitué de n'importe quel réseau classique consistant, par exemple, à mesurer des paramètres électriques. Il peut s'agir, par exemple, d'une mesure d'une tension seuil d'un transistor, d'une mesure d'une résistance ou d'une mesure de capacité parasite, d'une mesure de courant produit par une source de courant, d'une mesure de constante de temps (par exemple, un circuit RC), d'une mesure d'une fréquence d'oscillation etc. Comme ces caractéristiques sont sensibles aux dispersions technologiques et de procédé de fabrication du circuit intégré, on considère que le ou les paramètres électriques pris en compte sont propres à la fabrication et constituent une signature du circuit intégré.

L'exploitation des paramètres électriques pour obtenir le premier mot numérique est classique. Par exemple, les signaux électriques sont convertis en signaux numériques au moyen d'un convertisseur analogique-numérique et le cas échéant multiplexés pour constituer le mot stocké dans le registre 12.

En guise de réseau de paramètres physiques, on pourra également recourir à des circuits faisant appel à une mesure temporelle. Par exemple, on mesure le temps de lecture/écriture d'une mémoire de type EEPROM. Un exemple de réseau de paramètres physiques de ce type est décrit dans le brevet américain n° 5818738.

Le réseau de paramètres physiques 10 pourra encore être constitué d'un réseau de bascules tel que décrit dans la demande de brevet français n° 0104585 de la demanderesse.

Selon l'invention, le mot numérique stocké dans le registre 12 est fourni à un combineur 13 (COMB) recevant également un deuxième mot numérique stocké dans un élément 14 de mémorisation non volatile (NVM). Ce mot numérique 14 est généré, de préférence, au moyen d'un générateur 15 aléatoire (RNG) lorsque nécessaire, c'est-à-dire à chaque fois que la quantité secrète a besoin d'être changée en raison d'une révocation.

Le combineur 13 fournit la quantité secrète qui se trouve stockée, de préférence temporairement, dans un élément 16 de mémorisation (REG2). L'ensemble de la cellule d'extraction est commandé par une unité centrale 17 (CU) communiquant en outre avec le reste du circuit intégré 2. Le rôle de l'unité 17 est, entre autres, de provoquer la génération de la quantité secrète lorsque cela est demandé, par exemple, par la mise en oeuvre d'un processus d'authentification du circuit intégré, et de synchroniser le fonctionnement des différents constituants de la cellule 1. L'unité 17 sert également à provoquer la génération d'un nouveau mot numérique stocké dans l'élément 14 en cas de révocation de la quantité secrète précédemment utilisée. Cette fonction a été illustrée, schématiquement et à titre d'exemple, par un commutateur 19, intercalé sur la liaison reliant le générateur 15 à l'élément de mémorisation 14, et commandé par l'unité 17.

De préférence, toute la cellule 1 se trouve dans une zone dite sécurisée (SECURE) du circuit intégré. Une telle zone sécurisée signifie qu'elle est protégée contre une tentative de fraude par mesure électrique directe sur le circuit intégré. N'importe quelle méthode connue de sécurisation de zones de circuit intégré peut être utilisée. Par exemple, il peut s'agir d'une cellule noyée dans une résine dont la température de fusion entraînerait la destruction du circuit si un pirate tentait d'en détecter le contenu.

En variante, au lieu d'une génération aléatoire par l'élément 15, plusieurs mots numériques sont contenus dans une table stockée en mémoire non volatile (non représentée). La cellule sélectionne alors un de ces mots (sans possibilité de réutilisation d'un mot ayant déjà servi) à chaque besoin de régénération suite à une révocation. Dans ce cas, on veillera à ce que la mémoire contenant la table soit dans une zone sécurisée.

Les différentes liaisons de l'unité centrale de commande 17 aux autres composants de la cellule de génération n'ont pas été représentées et sont à la portée de l'homme du métier à partir des indications fonctionnelles de la présente description.

Un avantage de la présente invention est qu'en combinant la donnée issue du réseau de paramètres physiques à une autre donnée secrète stockée dans le circuit intégré, la quantité délivrée par la cellule d'extraction 1 peut être révoquée sans qu'il soit nécessaire de changer le circuit intégré pour la remplacer. En effet, on provoque alors la régénération d'un mot numérique à stocker dans l'élément 14 au moyen, par exemple, du générateur aléatoire 15. Ce mot est ensuite utilisé par le combineur 13 pour générer une quantité ou clé KEY différente.

On notera que la quantité générée KEY constitue la signature même du circuit intégré au sens de l'invention, c'est-à-dire que le système exploitant la quantité secrète, par exemple dans le cas d'une authentification, n'a pas besoin de savoir qu'il s'agit d'une combinaison.

Un autre avantage de la présente invention est qu'en combinant une donnée issue du réseau de paramètres physiques donc, par définition, non stockée de façon permanente dans un élément de mémorisation, avec un mot numérique stocké en mémoire non volatile, on préserve les avantages liés à l'utilisation d'une donnée issue d'un réseau de paramètres physiques, en particulier, par l'absence d'une détectabilité par mesure électrique directe.

Un autre avantage qu'il y a à combiner la quantité issue du réseau de paramètres physiques avec une autre quantité est que cela garantit des quantités KEY différentes même si deux circuits génèrent des premiers mots (registre 12) identiques. Cela correspond au cas où les réseaux de paramètres physiques de deux circuits distincts auraient la même réponse par le fait du hasard.

Selon un mode de réalisation préféré de l'invention, la donnée stockée dans le registre 12 est éphémère, c'est-à-dire que l'unité centrale 17 commande l'extraction du mot numérique issu du réseau de paramètres physiques à chaque besoin d'utilisation de la quantité secrète, et commande l'effacement des mots contenus dans les registres 12 et 16 au bout d'une durée prédéterminée qui suit cette génération. Cette durée est calculée pour laisser le temps au processus classique d'exploitation de la quantité secrète d'opérer les traitements nécessaires (par exemple, laisser le temps au processus d'authentification du circuit intégré d'opérer les vérifications nécessaires ou au processus de chiffrement d'exécuter les algorithmes prévus).

La fonction de combinaison opérée par l'élément 13 pourra être n'importe quelle fonction de combinaison connue. On pourra choisir une fonction simple du type addition, multiplication, soustraction bit à bit ou de résultat, ou encore des fonctions plus complexes. On notera toutefois que le fait d'avoir rendu révocable la quantité secrète fournie par le circuit intégré rend moins critique la complexité du combineur. Cela n'exclut toutefois pas de mettre en oeuvre des algorithmes de combinaison plus complexes selon les applications. Par exemple, on pourra mettre en oeuvre une fonction dite de hachage à sens unique recevant en entrée le mot issu du réseau de paramètres physiques et, en guise de mot de paramétrage, le mot stocké en mémoire non volatile.

La figure 2 représente une cellule 1' de génération d'une quantité secrète d'un circuit intégré selon un deuxième mode de réalisation de l'invention. La cellule 1' reprend tous les constituants de la cellule 1 décrite en relation avec la figure 1. Toutefois, selon ce deuxième mode de réalisation, on prévoit en outre de brouiller le deuxième mot numérique issu de l'élément de mémorisation non volatile 14 au moyen du mot numérique issu du réseau de paramètres physiques, en entier ou en partie, à l'aide d'un élément de brouillage 18 (SCRAMB).

Pour l'enregistrement d'un mot numérique dans l'élément 14, le générateur aléatoire 15 ou la table de mots prédéterminés fournit un mot au brouilleur 18, et l'unité centrale 17 déclenche l'extraction du mot numérique issu du réseau de paramètres physiques qui est fourni par le registre 12 au brouilleur 18. Un tel brouillage peut correspondre à n'importe quel codage ou combinaison classique de deux mots numériques (issus du registre 12 et, par exemple, du générateur 15) pour obtenir le mot à stocker dans l'élément 14.

Lors de la génération de la quantité KEY par la cellule 1', l'élément 18 fonctionne en décodeur et utilise là encore tout ou partie du mot numérique stocké dans le registre 12 pour décoder le mot extrait de l'élément 14 et fournir le résultat au combineur 13. Le reste du fonctionnement de la cellule 1' correspond au fonctionnement exposé en relation avec la figure 1.

Le recours à un codeur intégré à la zone sécurisée (SECURE) de la cellule 1 permet de stocker le mot contenu dans le registre 14 dans une mémoire non volatile externe à cette zone illustrée par un pointillé en figure 2.

Un avantage de la présente invention est qu'elle est indépendante de l'exploitation faite de la quantité KEY par l'extérieur de la cellule. Ainsi, la mise en oeuvre de l'invention est compatible avec les procédures d'exploitation existantes d'une quantité secrète fournie par un circuit intégré.

Un autre avantage de la présente invention est qu'elle préserve le caractère volatil (éphémère) des quantités secrètes basées sur l'extraction d'un mot issu de paramètres physiques.

Bien entendu, la présente invention est susceptible de diverses variantes et modifications qui apparaîtront à l'homme de l'art. En particulier, le choix des tailles des mots numériques utilisés dépend de l'application et de la longueur de la quantité secrète que l'on souhaite obtenir. Ce choix s'effectue de façon classique, en fonction notamment de la complexité souhaitée pour la cellule d'extraction et du nombre de quantités secrètes possibles souhaité pour le processeur d'authentification utilisé.

De plus, pour mémoriser les mots numériques, on pourra recourir à tout élément de mémorisation adapté, par exemple, des mémoires ou des parties de mémoire volatiles ou non selon le type de données stockées. En outre, l'écriture et la lecture des données dans ces éléments de mémorisation pourront être en série ou en parallèle.

## Revendications

1. Procédé de génération d'une quantité secrète (KEY) à partir d'un identifiant d'un circuit intégré (2), **caractérisé en ce qu'**il consiste à combiner (13) un premier mot numérique (12) issu d'un réseau de paramètres physiques (10) avec un deuxième mot stocké dans un élément (14) de mémoire non volatile.

2. Procédé selon la revendication 1, **caractérisé en ce que** le deuxième mot est destiné à être modifié suite à une révocation d'une quantité secrète précédente.

3. Procédé selon la revendication 1 ou 2, **caractérisé en ce que** le deuxième mot est généré de façon aléatoire.

4. Procédé selon l'une quelconque des revendications 1 à 3, **caractérisé en ce qu'**au moins le premier mot et la quantité secrète sont stockés dans des éléments d'une zone sécurisée du circuit intégré.

5. Procédé selon l'une quelconque des revendications 1 à 4, **caractérisé en ce que** le deuxième mot est brouillé (18) au moyen d'au moins une partie du premier mot.

6. Procédé de modification d'une quantité secrète (KEY) d'identification d'un circuit intégré (2) obtenue à partir d'un premier mot numérique issu d'un réseau de paramètres physiques (10) et considérée comme révoquée, **caractérisé en ce qu'**il consiste à combiner ledit premier mot avec un deuxième mot stocké dans un élément de mémoire non volatile, et à changer ledit deuxième mot à chaque besoin de génération d'une nouvelle quantité secrète.

7. Circuit de génération d'une quantité secrète (KEY) interne à un circuit intégré (2), **caractérisé en ce qu'**il comporte :
un générateur (11) d'un premier mot propre à la puce de circuit intégré basé sur un réseau de paramètres physiques (10) ;
un élément de mémorisation (14) non volatile destiné à contenir un deuxième mot numérique ; et
un combineur (13) des deux premiers mots fournissant ladite quantité secrète.

8. Circuit selon la revendication 7, **caractérisé en ce que** le deuxième mot peut être remplacé en cas de révocation de quantité secrète.

9. Circuit selon la revendication 7 ou 8, **caractérisé en ce qu'**il comporte en outre un brouilleur (18) en entrée/sortie de l'élément de mémorisation non volatile (14), le brouilleur exploitant au moins une partie du premier mot issu du réseau de paramètres physiques (10).

10. Circuit selon l'une quelconque des revendications 7 à 9, **caractérisé en ce qu'**il comporte en outre un générateur (15) de mots aléatoires pour former ledit deuxième mot numérique.

11. Circuit selon l'une quelconque des revendications 7 à 10, **caractérisé en ce qu'**il comprend des moyens (17) pour rendre éphémère les stockages respectifs du premier mot numérique issu du réseau de paramètres physiques (10) et du mot formant la quantité secrète.
